# FASCICULE DE BREVET EUROPEEN

(11) **EP 3 880 939 B1**
(45) Date de publication et mention de la délivrance du brevet: **15.02.2023**
(21) Numéro de dépôt: 19817398.1
(22) Date de dépôt: 06.11.2019
(51) Int. Cl.: F01D 11/00

(54) **ÉTANCHÉITÉ ENTRE UNE ROUE MOBILE ET UN DISTRIBUTEUR D'UNE TURBOMACHINE**
DICHTUNG ZWISCHEN EINER WELLE UND EINER LEITSCHAUFEL EINER TURBOMASCHINE
SEALING BETWEEN A ROTOR AND A VANE OF A TURBOMACHINE

(30) Priorité: 16.11.2018 FR 1860586
(43) Date de publication de la demande: 22.09.2021
(73) Titulaire: SAFRAN AIRCRAFT ENGINES, 75015 Paris (FR)
(72) Inventeur: TRAPPIER, Nicolas, Xavier, 77550 MOISSY-CRAMAYEL (FR); AMORIM, Joao, Antonio, 77550 MOISSY-CRAMAYEL (FR); ROTENBERG, Maxime, Aurélien, 77550 MOISSY-CRAMAYEL (FR)
(74) Mandataire: Gevers & Orès
(86) Numéro de dépôt international: PCT/FR2019/052635
(87) Numéro de publication internationale: WO 2020/099762

(56) Documents cités:
- EP-A1- 3 023 595
- WO-A1-2015/092281

## Description

### DOMAINE TECHNIQUE

La présente invention concerne le domaine des turbomachines telles qu'un turboréacteur ou un turbopropulseur d'avion, et plus particulièrement l'étanchéité entre une roue mobile et un distributeur adjacent d'une turbine d'une telle turbomachine.

### ETAT DE L'ART

Traditionnellement, une turbine de turbomachine comprend plusieurs étages comportant chacun une roue mobile dont l'axe de rotation X (ou axe moteur) est coaxial avec l'axe longitudinal de la turbomachine et un distributeur axialement adjacent. La roue mobile comprend une pluralité d'aubes mobiles comprenant chacune une pale qui s'étend radialement entre une plateforme radialement interne et une plateforme radialement externe, et un pied qui s'étend radialement sous la plateforme interne. En outre, radialement à l'extérieur, chaque aube mobile comprend un talon qui s'étend à partir de la plateforme radialement externe de l'aube mobile. Le distributeur comprend une pluralité de pales fixes qui s'étendent chacune radialement entre une plateforme interne et une plateforme externe. Dans la turbomachine, les plateformes interne et externe des roues mobiles et distributeurs délimitent un canal d'écoulement de gaz appelé veine primaire de la turbomachine.

Par convention dans la présente demande, on entend par « axial » ou « axialement » toute direction parallèle à l'axe X, et par « radial » ou « radialement » toute direction perpendiculaire à l'axe X. De même, par convention dans la présente demande, les termes « interne », « externe », « intérieur » et « extérieur » sont définis radialement par rapport à l'axe X. Enfin, les termes « amont » et « aval » sont définis par rapport au sens de circulation des gaz dans la veine primaire de la turbomachine.

Le pied de chaque aube mobile est monté dans une alvéole de forme complémentaire pratiquée dans un disque de la roue mobile. Les roues mobiles des différents étages sont généralement bridés les unes aux autres. Les roues mobiles et les plateformes internes des distributeurs définissent radialement entre eux différentes cavités (également appelées voies de contournement) en dehors de la veine.

Pour limiter les écoulements de gaz via ces cavités, et autrement dit maximiser la quantité de gaz traversant les pales des distributeurs, le document FR-A1-2977274 au nom de la demanderesse propose que la plateforme interne du distributeur comprend un pied sur lequel est fixé au moins un élément abradable, cet élément abradable étant apte à coopérer avec au moins une léchette solidaire de la roue mobile, pour former un joint d'étanchéité de type labyrinthe.

L'objectif de la présente invention est donc de proposer un dispositif d'étanchéité permettant de réduire efficacement les écoulements de gaz dans les cavités situées au niveau d'un pied de distributeur, tout en limitant la masse et l'encombrement.

L'art antérieur comprend également les documents WO-A1-2015/092281 et EP-A1-3023595.

### EXPOSE DE L'INVENTION

L'invention propose à cet effet un ensemble pour une turbomachine comprenant une première roue mobile qui s'étend autour d'un axe X et un distributeur adjacent, ledit distributeur étant coaxial avec ledit axe X et axialement décalé par rapport à ladite première roue mobile, ledit ensemble comprenant une pluralité d'éléments d'étanchéité, chaque élément d'étanchéité étant solidaire et s'étendant radialement en saillie de ladite première roue mobile, ledit distributeur comprenant une plateforme interne destinée à délimiter un canal d'écoulement de gaz dans la turbomachine et un pied s'étendant radialement sous la plateforme interne, ledit pied portant à une extrémité radialement interne au moins un élément abradable configuré pour coopérer avec les éléments d'étanchéité, caractérisé en ce que lesdits éléments d'étanchéité sont placés dans une enceinte formée par ledit au moins un élément abradable, ladite enceinte étant ouverte vers l'intérieur et délimitée axialement par un bord abradable amont et un bord abradable aval, ladite enceinte étant délimitée radialement par un bord abradable externe, et en ce qu'au moins un des éléments d'étanchéité comprend une première léchette configurée pour coopérer avec le bord abradable amont ou le bord abradable aval, et une seconde léchette distincte de la première léchette et configurée pour coopérer avec le bord abradable externe.

On entend par « bord abradable », un bord réalisé dans une matière abradable, par exemple une matière ayant une structure en nid d'abeille.

Premièrement, de tels éléments d'étanchéité sont configurés pour coopérer avec les bords abradables amont, aval et externe de l'enceinte, de manière à stopper le flux de gaz s'introduisant dans la cavité lors des différentes phases de fonctionnement de la turbomachine, et autrement dit maximiser la quantité de gaz traversant les pales du distributeur lors des différentes phases de fonctionnement de la turbomachine.

Deuxièmement, un tel dispositif d'étanchéité présente une masse et un encombrement limités.

L'ensemble selon l'invention peut comprendre une ou plusieurs des caractéristiques suivantes, prises isolément les unes des autres ou en combinaison les unes avec les autres :
- un élément d'étanchéité amont comprend une léchette axiale s'étendant vers l'amont, ladite léchette axiale dudit élément d'étanchéité amont étant configurée pour coopérer avec ledit bord abradable amont ;
- un élément d'étanchéité aval comprend une léchette axiale s'étendant vers l'aval, ladite léchette axiale dudit élément d'étanchéité aval étant configurée pour coopérer avec ledit bord abradable aval ;
- chacun des éléments d'étanchéité comprend une léchette radiale s'étendant vers l'extérieur, chacune des léchettes radiales étant configurée pour coopérer avec le bord abradable externe de l'enceinte formée par l'au moins un élément abradable ;
- ledit au moins un élément abradable est radialement étagé et comprend une première surface cylindrique entourant un élément d'étanchéité amont et une seconde surface cylindrique entourant un élément d'étanchéité aval ;
- ladite première surface cylindrique présente un diamètre supérieur à ladite seconde surface cylindrique ;
- ladite première roue mobile comprend un disque sur lequel sont rapportées des aubes mobiles, ledit disque comprenant une bride qui s'étend axialement, lesdits éléments d'étanchéité étant rapportés sur ladite bride ou venus de matière avec ladite bride ;
- ledit ensemble comprend une seconde roue mobile adjacente audit distributeur de sorte que ledit distributeur soit disposé axialement entre ladite première roue mobile et ladite seconde roue mobile, ledit ensemble comprenant un flasque bridé entre ladite première roue mobile et ladite seconde roue mobile, les éléments d'étanchéité étant rapportés sur ledit flasque ou venus de matière avec ledit flasque ;
- lesdits bords abradables amont et aval de l'enceinte formée par l'au moins un élément abradable sont rapportés sur ledit pied de ladite plateforme interne ;
- un premier élément abradable comprend ledit bord abradable amont et un second élément abradable comprend ledit bord abradable aval ;
- le pied comprend un organe abradable amont disposé axialement en amont du pied, ledit organe abradable amont étant apte à coopérer avec un becquet d'une aube mobile de la première roue mobile ;
- le pied comprend un organe abradable aval disposé axialement en aval du pied, ledit organe abradable aval étant apte à coopérer avec un becquet d'un flasque bridé entre ladite première roue mobile et une seconde roue mobile adjacente audit distributeur.

L'invention a pour deuxième objet une turbomachine comprenant une turbine comportant un ensemble tel que décrit précédemment.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue partielle en demi-coupe axiale d'une turbine d'une turbomachine illustrant un ensemble comprenant une roue mobile et un distributeur, selon un premier mode de réalisation ;
- la figure 2 est une vue partielle en demi-coupe axiale illustrant une variante du premier mode de réalisation ;
- la figure 3 est une vue partielle en demi-coupe axiale d'une turbine d'une turbomachine illustrant un ensemble comprenant une roue mobile et un distributeur, selon un second mode de réalisation ;
- la figure 4 est une vue partielle en demi-coupe axiale illustrant une variante du second mode de réalisation ;
- la figure 5 est une vue partielle en demi-coupe axiale d'une turbine d'une turbomachine illustrant un ensemble comprenant une roue mobile et un distributeur, selon un troisième mode de réalisation.

### DESCRIPTION DETAILLEE

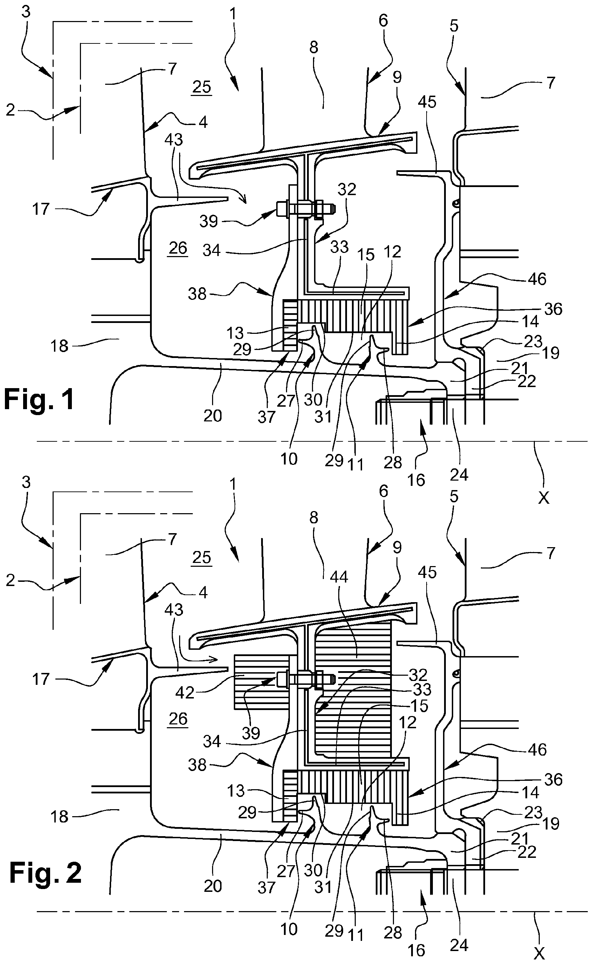

Sur les figures 1 à 5 est représenté un ensemble 1 d'une turbine basse pression 2 d'une turbomachine 3, telle qu'un turboréacteur ou un turbopropulseur d'avion. La turbine basse pression 2 est disposée en aval d'une turbine haute pression qui est elle-même disposée en aval d'une chambre de combustion, par rapport au sens de circulation des gaz dans la turbomachine 3.

Les modes de réalisation illustrés sur les figures 1 à 5 ne sont en rien limitatifs, l'ensemble décrit pourrait être disposé notamment dans une turbine haute pression.

L'ensemble 1 comprend une roue mobile 4, 5 qui s'étend autour d'un axe X et un distributeur 6 axialement adjacent. Le distributeur 6 est coaxial avec l'axe X et axialement décalé par rapport à la roue mobile 4, 5. L'ensemble 1 comprend une pluralité d'éléments d'étanchéité 10, 11. Chaque élément d'étanchéité 10, 11 est solidaire et s'étend radialement en saillie de la roue mobile 4, 5. Le distributeur 6 comprend une plateforme interne 9 destinée à délimiter un canal d'écoulement de gaz 25 dans la turbomachine 3 et un pied 32 s'étendant radialement sous la plateforme interne 9. Le pied 32 porte à une extrémité radialement interne au moins un élément abradable 36, 37, 47, 48 configuré pour coopérer avec les éléments d'étanchéité 10, 11. Les éléments d'étanchéité 10, 11 sont placés dans une enceinte 12 formée par l'au moins un élément abradable 36, 37, 47, 48. L'enceinte 12 est ouverte vers l'intérieur et délimitée axialement par un bord abradable amont 13 et un bord abradable aval 14. L'enceinte 12 est délimitée radialement par un bord abradable externe 15. Au moins un des éléments d'étanchéité 10, 11 comprend une première léchette 27, 28 configurée pour coopérer avec le bord abradable amont 13 ou le bord abradable aval 14, et une seconde léchette 29 distincte de la première léchette 27, 28 et configurée pour coopérer avec le bord abradable externe 15.

En fonction des besoins, la première léchette peut être axiale (et autrement dit s'étendre suivant une direction parallèle à l'axe X) ou inclinée vers l'intérieur (par rapport à l'axe X) ou inclinée vers l'extérieur (par rapport à l'axe X).

En fonction des besoins, la seconde léchette peut être radiale (et autrement dit s'étendre suivant une direction perpendiculaire à l'axe X) ou inclinée vers l'amont (par rapport à la perpendiculaire à l'axe X) ou inclinée vers l'aval (par rapport à la perpendiculaire à l'axe X).

Au moins un des éléments d'étanchéité comprend une première léchette et une seconde léchette, les autres éléments d'étanchéité pouvant comprendre chacun par exemple une première léchette et/ou une seconde léchette.

Plus précisément, selon les modes de réalisation illustrés sur les figures, l'ensemble 1 comprend un distributeur 6 placé entre une roue mobile amont 4 et une roue mobile aval 5 bridées l'une à l'autre via une pluralité de boulons 16. Les roues mobiles amont et aval 4, 5 forment le rotor de la turbine basse pression 2 et le distributeur 6 forme le stator de la turbine basse pression 2. Le distributeur 6 et la roue mobile aval 5 forment un sous-ensemble plus communément appelé « un étage » de la turbine basse pression 2.

Le distributeur 6 comprend une pluralité d'aubes fixes 8 réparties de manière régulière autour de l'axe X. Les aubes fixes 8 du distributeur 6 sont délimitées radialement par la plateforme interne 9 et une plateforme externe (non représentée). La plateforme externe comprend des moyens d'accrochage à un carter externe de la turbine basse pression 2. Le distributeur 6 peut être sectorisé et comprendre une pluralité de secteurs disposés circonférentiellement bout à bout autour de l'axe X.

Les roues mobiles 4, 5 comprennent chacune une pluralité d'aubes mobiles 7 réparties de manière régulière autour de l'axe X. Les aubes mobiles 7 sont délimitées chacune radialement par une plateforme radialement interne 17 d'un pied, le pied s'étendant radialement sous la plateforme radialement interne 17, et une plateforme radialement externe d'un talon (non représenté). Les aubes mobiles 7 d'une roue mobile 4, 5 sont rapportées dans des alvéoles pratiquées dans un disque 18, 19.

Le disque 18 de la roue mobile amont 4 comprend une bride aval 20 délimitée axialement par une extrémité aval 21. La bride aval 20 s'étend entre la roue mobile amont 4 et la roue mobile aval 5. La bride aval 20 est venue de matière avec le disque 18 de la roue mobile amont 4. L'extrémité aval 21 de la bride aval 20 est centrée et en appui sur une bride 22 d'un flasque annulaire 46. La bride 22 du flasque 46 est centrée et en appui sur un renfoncement 23 pratiqué dans le disque 19 de la roue mobile aval 5. La mise en position de l'extrémité aval 21 de la bride aval 20 vis-à-vis de la bride 22 du flasque 46 (via une surface d'appui et une surface de centrage) est formée par une liaison appui-plan et un centrage court. Une telle mise en position est également utilisée pour positionner la bride 22 du flasque 46 vis-à-vis du renfoncement 23 du disque 19 de la roue mobile aval 5. L'extrémité aval 21 de la bride aval 20 et la bride 22 du flasque 46 sont fixées au disque 19 de la roue mobile aval 5 via une pluralité de boulons 16. La vis 24 de chacun des boulons 16 traverse simultanément un trou débouchant pratiqué dans l'extrémité aval 21 de la bride aval 20, un trou débouchant pratiqué dans la bride 22 du flasque 46 et un trou débouchant pratiqué dans le disque 19 de la roue mobile aval 5.

Le flasque 46 est en appui contre les aubes mobiles 7 de la roue mobile aval 5.

Les plateformes internes et externes des roues mobiles et les plateformes internes et externes des distributeurs délimitent un canal d'écoulement de gaz 25 (communément appelé veine primaire) dans lequel circulent des gaz d'échappement.

Les disques 18, 19 des roues mobiles 4, 5 et la plateforme interne 9 du distributeur 6 définissent radialement entre eux une cavité interne 26 située radialement sous le canal 25.

Un flux mineur de gaz (représenté sur chacune des figures par une flèche) peut s'introduire dans la cavité 26 et se diriger vers l'aval, du fait de la différence de pression entre l'amont et l'aval du distributeur 6. Les éléments d'étanchéité 10, 11 sont configurés pour coopérer avec les bords abradables amont, aval et externe 13-15 de l'enceinte 12, de manière à stopper le flux de gaz s'introduisant dans la cavité 26 lors des différentes phases de fonctionnement de la turbomachine, et autrement dit maximiser la quantité de gaz traitée par le distributeur 6 lors des différentes phases de fonctionnement de la turbomachine. Une telle étanchéité permet également de minimiser l'impact thermique sur le rotor.

Selon les modes de réalisation illustrés sur les figures, l'ensemble 1 comprend un élément d'étanchéité amont 10 et un élément d'étanchéité aval 11 distants axialement l'un de l'autre.

Les modes de réalisation illustrés sur les figures 1 à 5 ne sont en rien limitatifs, l'ensemble décrit pourrait comprendre par exemple un troisième élément d'étanchéité placé entre l'élément d'étanchéité amont 10 et l'élément d'étanchéité aval 11.

Selon les modes de réalisation illustrés sur les figures, l'élément d'étanchéité amont 10 comprend une léchette axiale 27 s'étendant vers l'amont. La léchette axiale 27 de l'élément d'étanchéité amont 10 est configurée pour coopérer avec le bord abradable amont 13.

Plus précisément, la léchette axiale 27 fait saillie axialement depuis une extrémité libre de l'élément d'étanchéité amont 10. La léchette axiale 27 est positionnée directement en regard du bord abradable amont 13. La léchette axiale 27 est montée avec un jeu axial par rapport au bord abradable amont 13. La léchette axiale 27 sera notamment en contact axial avec le bord abradable amont 13 lorsque la turbomachine se trouve en phase de croisière, de manière à stopper le flux de gaz s'introduisant dans la cavité 26. Le contact axial est assuré via les déplacements axiaux relatifs entre les roues mobiles 4, 5 et le distributeur 6, lorsque la turbomachine est en fonctionnement.

L'élément d'étanchéité aval 11 comprend une léchette axiale 28 s'étendant vers l'aval. La léchette axiale 28 de l'élément d'étanchéité aval 11 est configurée pour coopérer avec le bord abradable aval 14.

Plus précisément, la léchette axiale 28 fait saillie axialement depuis une extrémité libre de l'élément d'étanchéité aval 11. La léchette axiale 28 est positionnée directement en regard du bord abradable aval 14. La léchette axiale 28 est montée avec un jeu axial par rapport au bord abradable aval 14. La léchette axiale 28 sera notamment en contact axial avec le bord abradable aval 14 lorsque la turbomachine se trouve en phase de démarrage, de manière à stopper le flux de gaz s'introduisant dans la cavité 26. Le contact axial est assuré via les déplacements axiaux relatifs entre les roues mobiles 4, 5 et le distributeur 6, lorsque la turbomachine est en fonctionnement.

Selon les modes de réalisation illustrés sur les figures, chacun des éléments d'étanchéité amont et aval 10, 11 comprend une léchette radiale 29 s'étendant vers l'extérieur, chacune des léchettes radiales 29 étant configurée pour coopérer avec le bord abradable externe 15 délimitant radialement l'enceinte 12.

Plus précisément, chaque léchette radiale 29 fait saillie radialement depuis une extrémité libre de l'élément d'étanchéité correspondant 10, 11. Chaque léchette radiale 29 est positionnée directement en regard du bord abradable externe 15. Chaque léchette radiale 29 est montée avec un jeu radial par rapport au bord abradable externe 15. Les léchettes radiales 29 seront notamment en contact radial avec le bord abradable externe 15 lorsque la turbomachine se trouve en phase transitoire entre la phase de démarrage et la phase de croisière (jusqu'à ce que les déplacements axiaux des roues mobiles 4, 5 et du distributeur 6 soient stabilisés), de manière à stopper le flux de gaz s'introduisant dans la cavité 26. Le contact radial est assuré en ventilant, avec un flux d'air froid, le carter externe de la turbine basse pression 2 via un dispositif de ventilation, plus connu sous l'acronyme anglais LPTACC pour « Low Pressure Turbine Active Control Clearance ». Un tel système de ventilation LPTACC comprend classiquement une écope de prélèvement d'un flux d'air froid, et un circuit destiné à répartir et à projeter l'air froid prélevé sur une face externe du carter externe de la turbine basse pression 2. Le dispositif de ventilation LPTACC permet de réguler la température du carter externe, et par voie de conséquence les jeux radiaux entre les léchettes radiales 29 et le bord abradable externe 15.

Tel qu'explicité ci-dessus, les léchettes axiales 27, 28 permettent de garantir l'étanchéité entre le distributeur 6 (plus précisément le pied 32) et le rotor pendant la phase de démarrage et une majeure partie de la phase de croisière. Ainsi, lors des différentes phases de fonctionnement précitées, il est possible de désactiver le système de ventilation LPTACC, au bénéfice du rendement de la turbomachine. Tel qu'explicité ci-dessus, le système de ventilation est activé en phase transitoire entre la phase de démarrage et la phase de croisière.

Selon les modes de réalisation illustrés sur les figures, le bord abradable externe 15 est étagé, le bord abradable externe 15 comprend une première surface cylindrique 30 entourant l'élément d'étanchéité amont 10 et une seconde surface cylindrique 31 entourant l'élément d'étanchéité aval 11.

Selon les premier et second modes de réalisation illustrés sur les figures 1 à 4, la première surface cylindrique 30 présente un diamètre supérieur à celui de la seconde surface cylindrique 31.

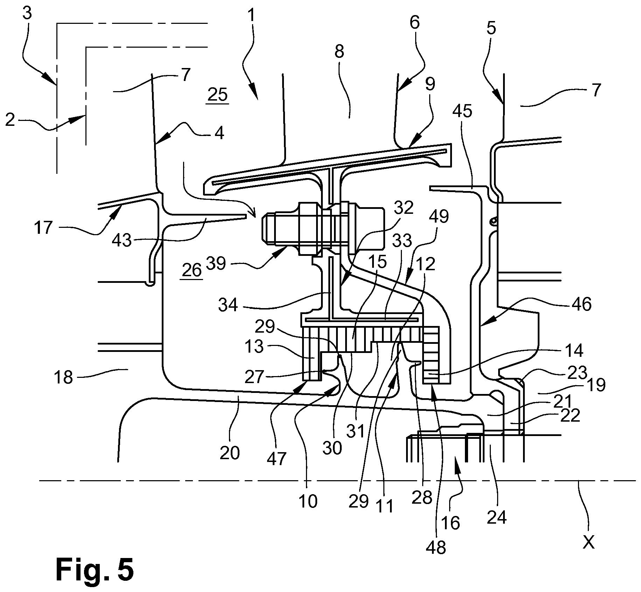

Selon le troisième mode de réalisation illustré sur la figure 5, la seconde surface cylindrique 31 présente un diamètre supérieur à celui de la première surface cylindrique 30.

Selon les modes de réalisation illustrés sur les figures, les bords abradables amont, aval et externe 13-15 sont rapportés sur le pied 32 du distributeur 6. Le pied 32 comporte une paroi axiale 33 et une paroi radiale 34 reliant la paroi axiale 33 à la plateforme interne 9.

Plus précisément, la plateforme interne 9 est tronconique et s'évase de l'amont vers l'aval. Le pied 32 présente en section un profil en « L ». La paroi axiale 33 s'étendant vers l'aval depuis une extrémité interne de la paroi radiale 34. Le pied 32 est ici venu de matière avec la plateforme interne 9.

Selon les premier et second modes de réalisation illustrés sur les figures 1 à 4, les bords abradables externe et aval 14, 15 forment un premier élément abradable 36 rapporté directement sur une face interne de la paroi axiale 33 du pied 32. Le bord abradable amont 13 forme un second élément abradable 37 rapporté sur une bague amont 38 qui est elle-même rapportée sur la paroi radiale 34 du pied 32. L'enceinte 12 est ainsi formée par les premier et second éléments abradables 36, 37.

Plus précisément, la bague amont 38 est fixée sur la paroi radiale 34 via des boulons 39, la vis de chacun des boulons 39 traversant simultanément un trou débouchant pratiqué dans la bague amont 38 et un trou débouchant pratiqué dans la paroi radiale 34. La bague amont 38 peut être sectorisée.

Selon une première variante de réalisation, le premier élément abradable pourrait être rapporté indirectement sur le pied. On entend par « rapporté indirectement », le fait de rapporter le premier élément abradable sur le pied via au moins une pièce intermédiaire.

Selon une seconde variante de réalisation, les bords abradables externe et aval pourraient former deux éléments abradables distincts rapportés directement ou indirectement sur le pied.

Selon une troisième variante de réalisation, la paroi axiale pourrait s'étendre vers l'amont depuis une extrémité interne de la paroi radiale. Les bords abradables externe et amont pourraient former un premier élément abradable rapporté, directement ou indirectement, sur le pied. Le bord abradable aval pourrait former un second élément abradable rapporté, directement ou indirectement, sur le pied.

Selon le troisième mode de réalisation illustré sur la figure 5, les bords abradables amont et externe 13, 15 forment un premier élément abradable 47 rapporté directement sur une face interne de la paroi axiale 33 du pied 32. Le bord abradable aval 14 forme un second élément abradable 48 rapporté sur une bague aval 49 qui est elle-même rapportée sur la paroi radiale 34 du pied 32. L'enceinte 12 est ainsi formée par les premier et second éléments abradables 47, 48.

Plus précisément, la bague aval 49 est fixée sur la paroi radiale 34 via des boulons 39, la vis de chacun des boulons 39 traversant simultanément un trou débouchant pratiqué dans la bague aval 49 et un trou débouchant pratiqué dans la paroi radiale 34. La bague aval 49 peut être sectorisée.

Selon les premier et troisième modes de réalisation illustrés sur les figures 1, 2 et 5, les éléments d'étanchéité amont et aval 10, 11 sont venus de matière avec la bride aval 20. Les éléments d'étanchéité amont et aval 10, 11 font saillie radialement vers l'extérieur depuis la bride aval 20.

En variante, les éléments d'étanchéité amont et aval pourraient être rapportés directement ou indirectement sur la bride aval.

Selon un mode de réalisation non représenté sur les figures, la bride aval pourrait être lié au disque de la roue mobile aval, et non au disque de la roue mobile amont. La bride aval serait alors par exemple venue de matière avec le disque de la roue mobile aval. L'extrémité aval de la bride aval serait alors mise en position et maintenue en position, directement ou indirectement (via par exemple un flasque), par rapport au disque de la roue mobile amont.

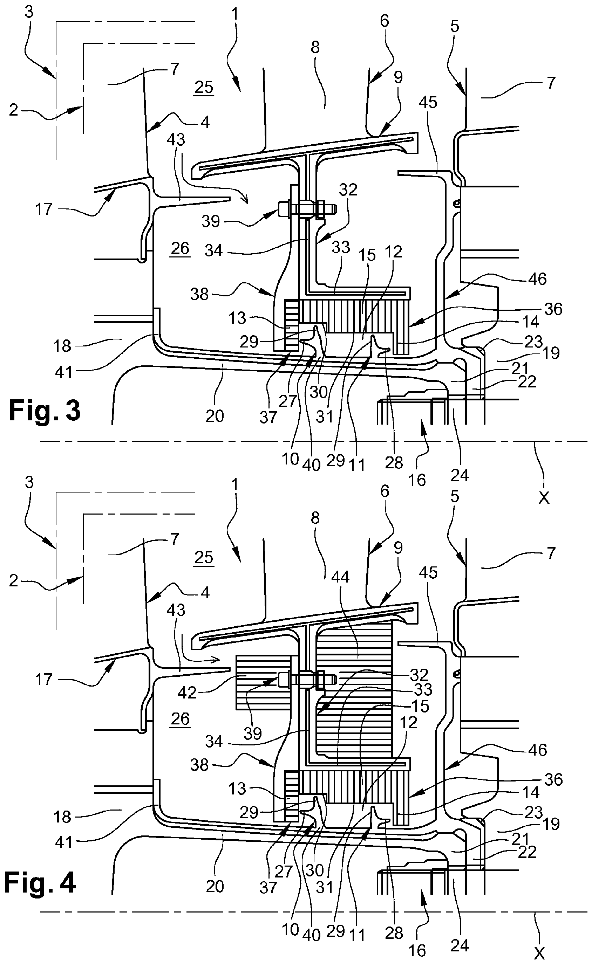

Selon le second mode de réalisation illustré sur les figures 3 et 4, les éléments d'étanchéité amont et aval 10, 11 sont venus de matière avec le flasque 46.

Plus précisément, les éléments d'étanchéité amont et aval 10, 11 sont venus de matière avec une paroi d'étanchéité 40 du flasque 46, la paroi d'étanchéité 40 entourant la bride aval 20. La paroi d'étanchéité 40 est ici venu de matière avec le flasque 46. Les éléments d'étanchéité amont et aval 10, 11 font saillie radialement vers l'extérieur depuis la paroi d'étanchéité 40. La paroi d'étanchéité 40 présente une extrémité amont 41 qui s'étend radialement en étant en appui contre le disque 18 de la roue mobile amont 4.

En variante, les éléments d'étanchéité amont et aval pourraient être rapportés directement ou indirectement sur la paroi d'étanchéité du flasque.

Selon les variantes de réalisation des premier et second modes de réalisation illustrées sur les figures 2 et 4, l'ensemble 1 comprend un organe abradable amont 42 disposé axialement en amont de la paroi radiale 34. L'organe abradable amont 42 est apte à coopérer avec des becquets 43 des aubes mobiles 7 de la roue mobile amont 4.

Plus précisément, l'organe abradable amont 42 est monté directement sur la bague amont 38. En variante, l'organe abradable amont 42 pourrait être monté sur la bague amont 38 ou le pied 32 via un élément intermédiaire. L'organe abradable amont 42 est positionné directement en regard de becquets aval 43 des plateformes internes 17 des aubes mobiles 7 de la roue mobile amont 4. L'organe abradable amont 42 est monté avec un jeu axial par rapport aux becquets aval 43. Les becquets aval 43 seront notamment en contact axial avec l'organe abradable amont 42 lorsque la turbomachine se trouve en phase de démarrage, de manière à stopper le flux de gaz s'introduisant dans la cavité 26. Le contact axial est assuré via les déplacements axiaux relatifs entre les roues mobiles 4, 5 et le distributeur 6, lorsque la turbomachine est en fonctionnement.

L'étanchéité réalisée via les becquets aval 43 et l'organe abradable amont 42 vient ici en complément de l'étanchéité réalisée via les éléments d'étanchéité amont et aval 10, 11.

En variante, l'organe abradable amont pourrait être apte à coopérer avec une collerette axiale d'un flasque annulaire bridé entre la roue mobile amont et la roue mobile aval, par exemple au niveau du disque de la roue mobile amont.

Selon les variantes de réalisation des premier et second modes de réalisation illustrées sur les figures 2 et 4, l'ensemble 1 comprend en outre un organe abradable aval 44 disposé axialement en aval de la paroi radiale 34. L'organe abradable aval 44 est apte à coopérer avec une collerette axiale 45 du flasque annulaire 46 bridé entre la roue mobile amont 4 et la roue mobile aval 5.

Plus précisément, la collerette axial 45 fait saillie axialement vers l'amont depuis une extrémité externe du flasque 46. L'organe abradable aval 44 est monté directement sur la face aval de la paroi radiale 34. En variante, l'organe abradable aval 44 pourrait être monté sur le pied 32 via un élément intermédiaire. L'organe abradable aval 44 est positionné directement en regard de la collerette axiale 45 du flasque 46. L'organe abradable aval 44 est monté avec un jeu axial par rapport à la collerette axiale 45. La collerette axiale 45 du flasque 46 sera notamment en contact axial avec l'organe abradable aval 44 lorsque la turbomachine se trouve en phase de croisière, de manière à stopper le flux de gaz s'introduisant dans la cavité 26. Le contact axial est assuré via les déplacements axiaux relatifs entre les roues mobiles 4, 5 et le distributeur 6, lorsque la turbomachine est en fonctionnement.

L'étanchéité réalisée via la collerette axial 45 et l'organe abradable aval 44 vient ici en complément de l'étanchéité réalisée via les éléments d'étanchéité amont et aval 10, 11.

En variante, l'organe abradable aval pourrait être apte à coopérer avec des becquets amont des plateformes internes des aubes mobiles de la roue mobile aval.

Selon un mode de réalisation non représenté, l'ensemble illustré sur la figure 5 (troisième mode de réalisation) pourrait comprendre un organe abradable amont 42 et/ou un organe abradable aval 44, de la même manière que les premier et second modes de réalisation.

## Revendications

1. Ensemble (1) pour une turbomachine (3) comprenant une première roue mobile (4) qui s'étend autour d'un axe (X) et un distributeur (6) adjacent, ledit distributeur (6) étant coaxial avec ledit axe (X) et axialement décalé par rapport à ladite première roue mobile (4), ledit ensemble comprenant une pluralité d'éléments d'étanchéité (10, 11), chaque élément d'étanchéité (10, 11) étant solidaire et s'étendant radialement en saillie de ladite première roue mobile (4), ledit distributeur (6) comprenant une plateforme interne (9) destinée à délimiter un canal d'écoulement de gaz (25) dans la turbomachine (3) et un pied (32) s'étendant radialement sous la plateforme interne (9), ledit pied (32) portant à une extrémité radialement interne au moins un élément abradable (36, 37, 48, 49) configuré pour coopérer avec les éléments d'étanchéité (10, 11), **caractérisé en ce que** les éléments d'étanchéité (10, 11) sont placés dans une enceinte (12) formée par ledit au moins un élément abradable (36, 37, 48, 49), ladite enceinte (12) étant ouverte vers l'intérieur et délimitée axialement par un bord abradable amont (13) et un bord abradable aval (14), ladite enceinte (12) étant délimitée radialement par un bord abradable externe (15), et **en ce qu'**au moins un des éléments d'étanchéité (10, 11) comprend une première léchette (27, 28) configurée pour coopérer avec le bord abradable amont (13) ou le bord abradable aval (14), et une seconde léchette (29) distincte de la première léchette (27, 28) et configurée pour coopérer avec le bord abradable externe (15).

2. Ensemble (1) selon la revendication 1, **caractérisé en ce qu'**un élément d'étanchéité amont (10) comprend une léchette axiale (27) s'étendant vers l'amont, ladite léchette axiale (27) dudit élément d'étanchéité amont (10) étant configurée pour coopérer avec ledit bord abradable amont (13).

3. Ensemble (1) selon l'une des revendications précédentes, **caractérisé en ce qu'**un élément d'étanchéité aval (11) comprend une léchette axiale (28) s'étendant vers l'aval, ladite léchette axiale (28) dudit élément d'étanchéité aval (11) étant configurée pour coopérer avec ledit bord abradable aval (14).

4. Ensemble (1) selon l'une des revendications précédentes, **caractérisé en ce que** chacun des éléments d'étanchéité (10, 11) comprend une léchette radiale (29) s'étendant vers l'extérieur, chacune des léchettes radiales (29) étant configurée pour coopérer avec le bord abradable externe (15) de l'enceinte (12) formée par l'au moins un élément abradable (36, 37, 48, 49).

5. Ensemble (1) selon l'une des revendications précédentes, **caractérisé en ce que** ledit au moins un élément abradable (36, 47) est radialement étagé et comprend une première surface cylindrique (30) entourant un élément d'étanchéité amont (10) et une seconde surface cylindrique (31) entourant un élément d'étanchéité aval (11).

6. Ensemble (1) selon la revendication 5, **caractérisé en ce que** ladite première surface cylindrique (30) présente un diamètre supérieur à ladite seconde surface cylindrique (31).

7. Ensemble (1) selon l'une des revendications précédentes, **caractérisé en ce que** ladite première roue mobile (4) comprend un disque (18) sur lequel sont rapportées des aubes mobiles (7), ledit disque (18) comprenant une bride (20) qui s'étend axialement, lesdits éléments d'étanchéité (10, 11) étant rapportés sur ladite bride (20) ou venus de matière avec ladite bride (20).

8. Ensemble (1) selon l'une des revendications 1 à 6, **caractérisé en ce que** ledit ensemble (1) comprend une seconde roue mobile (5) adjacente audit distributeur (6) de sorte que ledit distributeur (6) soit disposé axialement entre ladite première roue mobile (4) et ladite seconde roue mobile (5), ledit ensemble (1) comprenant un flasque (46) bridé entre ladite première roue mobile (4) et ladite seconde roue mobile (5), les éléments d'étanchéité (10, 11) étant rapportés sur ledit flasque (46) ou venus de matière avec ledit flasque (46).

9. Ensemble (1) selon l'une des revendications précédentes, **caractérisé en ce que** lesdits bords abradables amont et aval (13, 14) de l'enceinte (12) formée par l'au moins un élément abradable (36, 37, 48, 49) sont rapportés sur ledit pied (32) de ladite plateforme interne (9).

10. Ensemble (1) selon l'une des revendications précédentes, **caractérisé en ce qu'**un premier élément abradable (37, 47) comprend ledit bord abradable amont (13) et un second élément abradable (36, 48) comprend ledit bord abradable aval (14).

11. Ensemble (1) selon l'une des revendications précédentes, **caractérisé en ce que** le pied (32) comprend un organe abradable amont (42) disposé axialement en amont du pied (32), ledit organe abradable amont (42) étant apte à coopérer avec un becquet (42) d'une aube mobile (7) de la première roue mobile (4).

12. Ensemble (1) selon l'une des revendications précédentes, **caractérisé en ce que** le pied (32) comprend un organe abradable aval (44) disposé axialement en aval du pied (32), ledit organe abradable aval (44) étant apte à coopérer avec un becquet (45) d'un flasque (46) bridé entre ladite première roue mobile (4) et une seconde roue mobile (5) adjacente audit distributeur (6).

13. Turbomachine (3) comprenant une turbine (2) comportant un ensemble (1) selon l'une des revendications précédentes.

## Patentansprüche

1. Baugruppe (1) für eine Turbomaschine (3), die ein erstes bewegliches Rad (4), das sich um eine Achse (X) herum erstreckt, und einen angrenzenden Verteiler (6) umfasst, wobei der Verteiler (6) mit der Achse (X) koaxial und in Bezug auf das erste bewegliche Rad (4) axial versetzt ist, wobei die Baugruppe eine Vielzahl von Dichtungselementen (10, 11) umfasst, wobei jedes Dichtungselement (10, 11) fest verbunden ist und sich radial vom ersten beweglichen Rad (4) vorspringend erstreckt, wobei der Verteiler (6) eine innere Plattform (9), die dazu bestimmt ist, einen Gasströmungskanal (25) in der Turbomaschine (3) zu begrenzen, und einen Fuß (32) umfasst, der sich radial unter der inneren Plattform (9) erstreckt, wobei der Fuß (32) an einem radial inneren Ende mindestens ein abreibbares Element (36, 37, 48, 49) trägt, das so ausgelegt ist, dass es mit den Dichtungselementen (10, 11) zusammenwirkt, **dadurch gekennzeichnet, dass** die Dichtungselemente (10, 11) in einem Gehäuse (12) untergebracht sind, das von dem mindestens einen abreibbaren Element (36, 37, 48, 49) gebildet wird, wobei das Gehäuse (12) zur Innenseite hin geöffnet ist und axial von einem abreibbaren stromaufwärtigen Rand (13) und einem abreibbaren stromabwärtigen Rand (14) begrenzt wird, wobei das Gehäuse (12) radial von einem abreibbaren äußeren Rand (15) begrenzt wird, und dadurch, dass mindestens eines der Dichtungselemente (10, 11) eine erste Zunge (27, 28), die so ausgelegt ist, dass sie mit dem abreibbaren stromaufwärtigen Rand (13) oder dem abreibbaren stromabwärtigen Rand (14) zusammenwirkt, und eine zweite Zunge (29) umfasst, die sich von der ersten Zunge (27, 28) unterscheidet und so ausgelegt ist, dass sie mit dem abreibbaren äußeren Rand (15) zusammenwirkt.

2. Baugruppe (1) nach Anspruch 1, **dadurch gekennzeichnet, dass** ein stromaufwärtiges Dichtungselement (10) eine axiale Zunge (27) umfasst, die sich stromaufwärts erstreckt, wobei die axiale Zunge (27) des stromaufwärtigen Dichtungselements (10) so ausgelegt ist, dass sie mit dem abreibbaren stromaufwärtigen Rand (13) zusammenwirkt.

3. Baugruppe (1) nach einem der vorstehenden Ansprüche, **dadurch gekennzeichnet, dass** ein stromabwärtiges Dichtungselement (11) eine axiale Zunge (28) umfasst, die sich stromabwärts erstreckt, wobei die axiale Zunge (28) des stromabwärtigen Dichtungselements (11) so ausgelegt ist, dass sie mit dem abreibbaren stromabwärtigen Rand (14) zusammenwirkt.

4. Baugruppe (1) nach einem der vorstehenden Ansprüche, **dadurch gekennzeichnet, dass** jedes der Dichtungselemente (10, 11) eine radiale Zunge (29) umfasst, die sich zur Außenseite hin erstreckt, wobei jede der radialen Zungen (29) so ausgelegt ist, dass sie mit dem abreibbaren äußeren Rand (15) des Gehäuses (12), das von dem mindestens einen abreibbaren Element (36, 37, 48, 49) gebildet wird, zusammenwirkt.

5. Baugruppe (1) nach einem der vorstehenden Ansprüche, **dadurch gekennzeichnet, dass** das mindestens eine abreibbare Element (36, 47) radial gestuft ist und eine erste zylindrische Fläche (30), die ein stromaufwärtiges Dichtungselement (10) umgibt, und eine zweite zylindrische Fläche (31) umfasst, die ein stromabwärtiges Dichtungselement (11) umgibt.

6. Baugruppe (1) nach Anspruch 5, **dadurch gekennzeichnet, dass** die erste zylindrische Fläche (30) einen größeren Durchmesser aufweist als die zweite zylindrische Fläche (31).

7. Baugruppe (1) nach einem der vorstehenden Ansprüche, **dadurch gekennzeichnet, dass** das erste bewegliche Rad (4) eine Scheibe (18) umfasst, an der bewegliche Schaufeln (7) angebracht sind, wobei die Scheibe (18) einen Flansch (20) umfasst, der sich axial erstreckt, wobei die Dichtungselemente (10, 11) an dem Flansch (20) angebracht oder mit dem Flansch (20) einstückig gebildet sind.

8. Baugruppe (1) nach einem der Ansprüche 1 bis 6, **dadurch gekennzeichnet, dass** die Baugruppe (1) ein zweites bewegliches Rad (5) umfasst, das so an den Verteiler (6) angrenzt, dass der Verteiler (6) axial zwischen dem ersten beweglichen Rad (4) und dem zweiten beweglichen Rad (5) angeordnet ist, wobei die Baugruppe (1) einen Flansch (46) umfasst, der zwischen dem ersten beweglichen Rad (4) und dem zweiten beweglichen Rad (5) angeflanscht ist, wobei die Dichtungselemente (10, 11) an dem Flansch (46) angebracht oder mit dem Flansch (46) einstückig gebildet sind.

9. Baugruppe (1) nach einem der vorstehenden Ansprüche, **dadurch gekennzeichnet, dass** der abreibbare stromaufwärtige und der abreibbare stromabwärtige Rand (13, 14) des Gehäuses (12), das von dem mindestens einen abreibbaren Element (36, 37, 48, 49) gebildet wird, an dem Fuß (32) der inneren Plattform (9) angebracht sind.

10. Baugruppe (1) nach einem der vorstehenden Ansprüche, **dadurch gekennzeichnet, dass** ein erstes abreibbares Element (37, 47) den abreibbaren stromaufwärtigen Rand (13) umfasst, und ein zweites abreibbares Element (36, 48) den abreibbaren stromabwärtigen Rand (14) umfasst.

11. Baugruppe (1) nach einem der vorstehenden Ansprüche, **dadurch gekennzeichnet, dass** der Fuß (32) ein abreibbares stromaufwärtiges Glied (42) umfasst, das axial stromaufwärts des Fußes (32) angeordnet ist, wobei das abreibbare stromaufwärtige Glied (42) in der Lage ist, mit einem Spoiler (42) einer beweglichen Schaufel (7) des ersten beweglichen Rads (4) zusammenzuwirken.

12. Baugruppe (1) nach einem der vorstehenden Ansprüche, **dadurch gekennzeichnet, dass** der Fuß (32) ein abreibbares stromabwärtiges Glied (44) umfasst, das axial stromabwärts des Fußes (32) angeordnet ist, wobei das abreibbare stromabwärtige Glied (44) in der Lage ist, mit einem Spoiler (45) eines Flansches (46) zusammenzuwirken, der zwischen dem ersten beweglichen Rad (4) und einem zweiten beweglichen Rad (5) an den Verteiler (6) angrenzend angeflanscht ist.

13. Turbomaschine (3), die eine Turbine (2) umfasst, welche eine Baugruppe (1) nach einem der vorstehenden Ansprüche umfasst.

## Claims

1. An assembly (1) for a turbomachine (3) comprising a first mobile wheel (4) extending around an axis (X) and an adjacent bladed turbine stator (6), said bladed turbine stator (6) being coaxial with said axis (X) and axially offset from said first mobile wheel (4), said assembly comprising a plurality of sealing elements (10, 11), each sealing element (10, 11) being secured to said first mobile wheel and projecting radially from said first mobile wheel (4), said bladed turbine stator (6) comprising an inner platform (9) intended to delimit a gas flow channel (25) in the turbomachine (3) and a root (32) extending radially below the inner platform (9), said root (32) bearing at a radially inner end at least one abradable element (36, 37, 48, 49) configured to cooperate with the sealing elements (10, 11), **characterised in that** the sealing elements (10, 11) are placed in an enclosure (12) formed by said at least one abradable element (36, 37, 48, 49), said enclosure (12) being open inwards and delimited axially by an upstream abradable edge (13) and a downstream abradable edge (14), said enclosure (12) being radially delimited by an outer abradable edge (15), and **in that** at least one of the sealing elements (10, 11) comprises a first lip (27, 28) configured to cooperate with the upstream abradable edge (13) or the downstream abradable edge (14), and a second lip (29) separate from the first lip (27, 28) and configured to cooperate with the outer abradable edge (15).

2. The assembly (1) according to claim 1, **characterised in that** an upstream sealing element (10) comprises an axial lip (27) extending upstream, said axial lip (27) of said upstream sealing element (10) being configured to cooperate with said upstream abradable edge (13).

3. The assembly (1) according to any of the preceding claims, **characterised in that** a downstream sealing element (11) comprises an axial lip (28) extending downstream, said axial lip (28) of said downstream sealing element (11) being configured to cooperate with said downstream abradable edge (14).

4. The assembly (1) according to any of the preceding claims, **characterised in that** each of the sealing elements (10, 11) comprises a radial lip (29) extending outwardly, each of the radial lips (29) being configured to cooperate with the outer abradable edge (15) of the enclosure (12) formed by the at least one abradable element (36, 37, 48, 49).

5. The assembly (1) according to any of the preceding claims, **characterised in that** the at least one abradable element (36, 47) is radially staged and comprises a first cylindrical surface (30) surrounding an upstream sealing element (10) and a second cylindrical surface (31) surrounding a downstream sealing element (11).

6. The assembly (1) according to claim 5, **characterised in that** said first cylindrical surface (30) has a larger diameter than said second cylindrical surface (31).

7. The assembly (1) according to any of the preceding claims, **characterised in that** said first mobile wheel (4) comprises a disc (18) to which mobile vanes (7) are fitted, said disc (18) comprising a flange (20) extending axially, said sealing elements (10, 11) being fitted to said flange (20) or integrally formed with said flange (20).

8. The assembly (1) according to any of claims 1 to 6, **characterised in that** said assembly (1) comprises a second mobile wheel (5) adjacent to said bladed turbine stator (6) so that said bladed turbine stator (6) is axially arranged between said first mobile wheel (4) and said second mobile wheel (5), said assembly (1) comprising a shroud (46) flanged between said first mobile wheel (4) and said second mobile wheel (5), the sealing elements (10, 11) being fitted to said shroud (46) or integrally formed with said shroud (46).

9. The assembly (1) according to one of the preceding claims, **characterised in that** said upstream and downstream abradable edges (13, 14) of the enclosure (12) formed by the at least one abradable element (36, 37, 48, 49) are fitted to said root (32) of said inner platform (9).

10. The assembly (1) according to one of the preceding claims, **characterised in that** a first abradable element (37, 47) comprises said upstream abradable edge (13) and a second abradable element (36, 48) comprises said downstream abradable edge (14).

11. The assembly (1) according to one of the preceding claims, **characterised in that** the root (32) comprises an upstream abradable member (42) arranged axially upstream of the root (32), said upstream abradable member (42) being adapted to cooperate with a spoiler (42) of a mobile vane (7) of the first mobile wheel (4).

12. The assembly (1) according to one of the preceding claims, **characterised in that** the root (32) comprises a downstream abradable member (44) arranged axially downstream of the root (32), said downstream abradable member (44) being adapted to cooperate with a spoiler (45) of a shroud (46) flanged between said first mobile wheel (4) and a second mobile wheel (5) adjacent to said bladed turbine stator (6).

13. A turbomachine (3) comprising a turbine (2) comprising an assembly (1) according to any of the preceding claims.
